# EUROPEAN PATENT SPECIFICATION

(11) **EP 2 711 644 B1**
(45) Date of publication and mention of the grant of the patent: **01.08.2018**
(21) Application number: 12873882.0
(22) Date of filing: 26.10.2012
(51) Int. Cl.: F28D 20/02, F24F 11/00, F28F 25/06, F28D 20/00, F24F 5/00

(54) **COOLING SYSTEM USING COLD AIR ON INTER-SEASONAL BASIS**
KÜHLSYSTEM MIT MIT KALTLUFT AUF ZWISCHENJAHRESZEITLICHER BASIS
SYSTÈME DE REFROIDISSEMENT UTILISANT DE L'AIR FROID EN SAISON INTERMÉDIAIRE

(30) Priority: 22.06.2012 KR 20120067621
(43) Date of publication of application: 26.03.2014
(73) Proprietor: Korea Institute of Energy Research, Daejeon 305-343 (KR)
(72) Inventor: IM, YongHoon, Daejeon 305-755 (KR); PARK, Byung Sik, Daejeon 302-791 (KR); CHUNG, Deahun, Seoul 135-873 (KR)
(74) Representative: Petraz, Gilberto Luigi
(86) International application number: PCT/KR2012/008832
(87) International publication number: WO 2013/191331

(56) References cited:
- JP-A- 2001 235 180
- JP-A- 2001 317 845
- JP-A- 2002 228 207
- JP-A- 2003 274 749
- JP-A- 2003 336 869
- JP-A- 2004 218 897
- JP-A- 2010 144 943
- JP-A- 2010 144 943
- US-A- 1 297 633

## Description

### CROSS-REFERENCE TO RELATED APPLICATIONS

This application claims priority to and the benefit of Korean Patent Application No. 10-2012-0067621 filed in the Korean Intellectual Property Office on June 22, 2012.

### TECHNICAL FIELD

The present invention relates to air-conditioning that controls a living temperature by lowering the temperature of a room, and more particularly, to an air-conditioning system that cools and stores a heat medium (water) by using external cool air in the winter time and thereafter, supplies cool wind which is heat-exchanged with the heat medium to a place requiring the cool wind when necessary (in the summer time) to cool the room, thereby obtaining an economic gain by significantly reducing energy consumption and implement nature-friendly cooling for reducing discharge of greenhouse gas.

### BACKGROUND ART

In general, air-conditioning that artificially lowers the temperature of the room is performed so as to live a fresh life by controlling a human physical body temperature depending on an increase of the temperature of the room in a serious heat wave of the summer time.

That is, a human body reaches a physical body temperature control region by perspiration when an external temperature is equal to or higher than 31°C and the human body is vulnerable to various diseases, and as a result, it is difficult to continue health and a life due to a rise of the body temperature when the external temperature is equal to or higher than 35°C.

Therefore, the cool wind is supplied to a high-temperature room to be cooled for the health and the fresh life of the human body to achieve the health and the fresh life.

For such cooling, a cooling apparatus (air-conditioner) is primarily used, which cools the heat medium by receiving power, lowers an air temperature to be a lower temperature by exchanging heat between the cooled heat medium and air, and thereafter, supplies the air whose temperature is lowered to a low temperature to the room to cool the room.

Document US 1 297 633 A discloses a cooling and ventilating method which consists in supplying a subterranean chamber with a suitable body of water, then by passing through such body of water natural currents of air at freezing temperature, and then, while the ice thus formed in said chamber remains in place, passing a current of air through suitable conduits invested in such ice into the place to be cooled.

### SUMMARY OF THE INVENTION

However, the aforementioned conventional cooling apparatuses excessively consume additional energy (electric energy) to causes nation's power demand and supply crisis due to excessive power consumption in the summer time when cooling is rapidly saturated, degrade use efficiency of energy, and increase discharge of greenhouse gas due to production of power, thereby causing an environmental problem such as global warming.

With an increase in energy use cost by driving the cooling apparatus, an economical problem may be caused to a user.

The present invention has been made in an effort to provide an air-conditioning system based on a seasonal cooling power storage concept that cools and stores a heat medium (water) by using external cool air that is naturally formed in the winter time and thereafter, supplies a cool wind which is heat-exchanged with a previously stored heat medium to a place requiring the cool wind when cooling power is required to cool a room, thereby obtaining an economical gain by significantly energy consumption and implementing nature-friendly cooling for reducing discharge of greenhouse gas.

An exemplary embodiment of the present invention provides an air-conditioning system, including: a storage chamber having a space portion therein; a cooling chamber including a heat medium supplying unit positioned in the storage chamber, having a space portion therein, and supplying a heat medium onto the space portion and including an air inflow unit configured to receive external air to cool the heat medium through the supplied air and store the cooled heat medium; and a cool wind supplying unit configured to supply air cooled at a low temperature by exchanging heat with the cooled heat medium stored in the cooling chamber to a use place.

The storage chamber may be formed by a basement of a multi-story building.

The use place may be constituted by ground stories including the basement of the multi-story building.

The heat medium may be composed of water.

The air inflow unit may be formed by a blower that is provided in the storage chamber to blow external air to the cooling chamber.

The heat medium supplying unit may include a supply pipe configured to supply water from the outside, a first valve provided in the supply pipe to open and close the supply of the heat medium, a branch pipe provided in the cooling chamber and connected with the supply pipe to receive the heat medium, and branched into multiple pipes, and an injection nozzle provided in the branch pipe and configured to inject the heat medium that flows into the branch pipe to the cooling chamber.

The branch pipe may extend radially in plural around the supply pipe.

A storage tank in which the heat medium is cooled and stored may be provided in the cooling chamber.

An air collecting chamber configured to collect high-temperature air in the cooling chamber and discharge the collected air to the outside is provided in an upper part of the space portion of the cooling chamber, and a discharge valve configured to open and close based on pressure set according to the pressure of air to discharge the air to the outside is provided in the air collecting chamber.

An inner wall of the storage tank may be formed by a heat insulator having elasticity to have extensibility.

An air chamber in which cooling air is circulated may be provided in a lower part of the storage tank.

A housing chamber housing a liquefied heat medium generated by liquefying the cooled heat medium may be provided in a lower part of the air chamber.

A plurality of via-holes may be formed on a bottom surface of the storage tank.

The air chamber may be connected with the storage tank and the housing chamber, and as a result, the air and the liquefied heat medium may flow in the air chamber.

A blowing pipe configured to supply air to the use place may be provided in the air chamber, and a second valve opened and closed to control the supply of air may be provided in the blowing pipe.

An input pipe configured to receive air from the outside and exchange heat with the liquefied heat medium housed in the housing chamber to cool the received air at the low temperature and connected with the blowing pipe to supply the air cooled at the low temperature may be provided in the housing chamber.

A third valve configured to open and close the supply of air may be provided in the input pipe and an air pump configured to forcibly blow air may be provided in the input pipe.

An inflow pipe supplying the air of the storage chamber to the space portion of the cooling chamber and constituted by a plurality of discharge holes may be provided in the cooling chamber, and a fourth valve opened and closed to control the supply of air may be provided in the inflow pipe.

A recovery pipe configured to supply the low-temperature used air collected in the use place may be provided in the cooling chamber and a fifth valve opened and closed to control the supply of air may be provided in the recovery pipe.

The cooling chamber may be connected with an outlet of an ice maker to receive ice made by the ice maker.

The ice maker may receive power through a solar cell provided in the building of the use place.

The ice maker may receive power through a wind power generator provided in the building of the use place.

According to the exemplary embodiment of the present invention, the air-conditioning system cools a heat medium (water) by using external cool air that is naturally formed in the winter time and stores the cooled heat medium in a storage of a cooling chamber and thereafter, generates a cool wind by melting the cooled heat medium stored in the storage of the cooling chamber when necessary in the summer time and cools air of a use place by using the cool wind to the use place by using a cool wind supplying means, thereby obtaining an economical gain by performing cooling without consuming additional energy and implementing environment-friendly cooling by reducing discharge of greenhouse gas through a decrease of a greenhouse gas generation cause.

### BRIEF DESCRIPTION OF THE DRAWINGS

FIG. 1 is a schematic cross-sectional exemplary view illustrating an air-conditioning system according to an exemplary embodiment of the present invention.
FIG. 2 is a schematic cross-sectional exemplary view illustrating an operation of cooling a heat medium in the air-conditioning system according to the exemplary embodiment.
FIG. 3 is a schematic cross-sectional exemplary view illustrating an operation of generating a cool wind through the heat medium and supplying the generated cool wind to a use place in the air-conditioning system according to the exemplary embodiment.
FIGS. 4 to 8 are partial schematic exemplary views sequentially illustrating an operation of cooling the heat medium in the air-conditioning system according to the exemplary embodiment.
FIGS. 9 to 15 are partial schematic exemplary views sequentially illustrating an operation of generating the cool wind through the heat medium and supplying the generated cool wind in the air-conditioning system according to the exemplary embodiment.
FIGS. 16 and 17 are partial schematic exemplary views illustrating complementation of the cooled heat medium lost in the air-conditioning system according to the exemplary embodiment.

### DETAILED DESCRIPTION

Hereinafter, an air-conditioning system according to an exemplary embodiment of the present invention will be described in detail below with reference to the accompanying drawings.

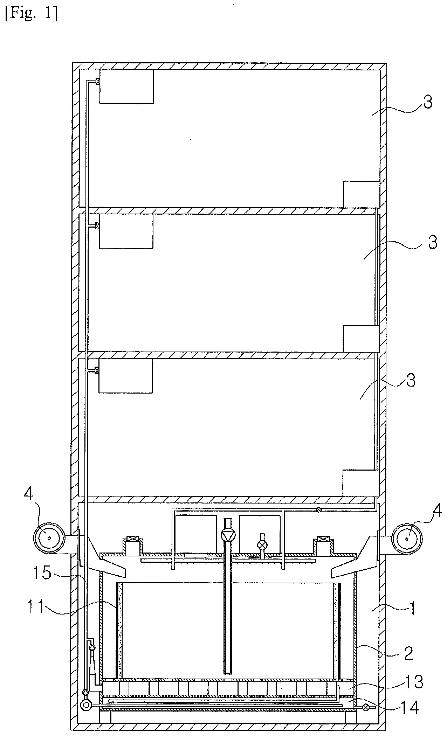

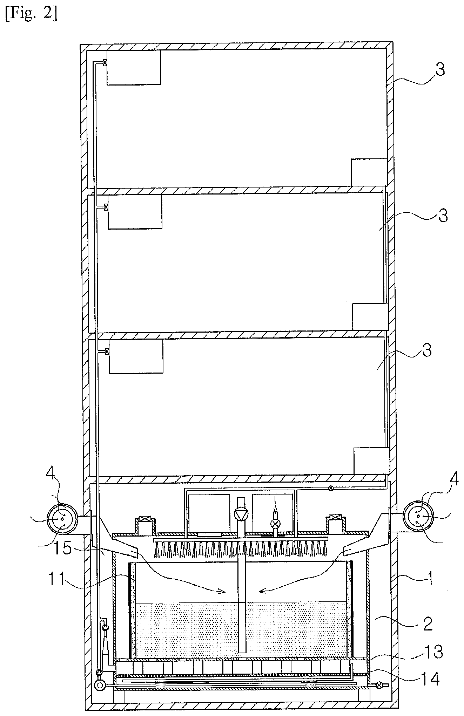

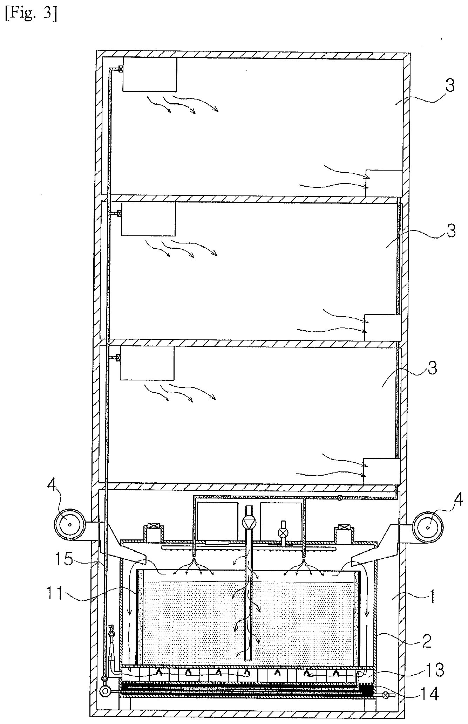

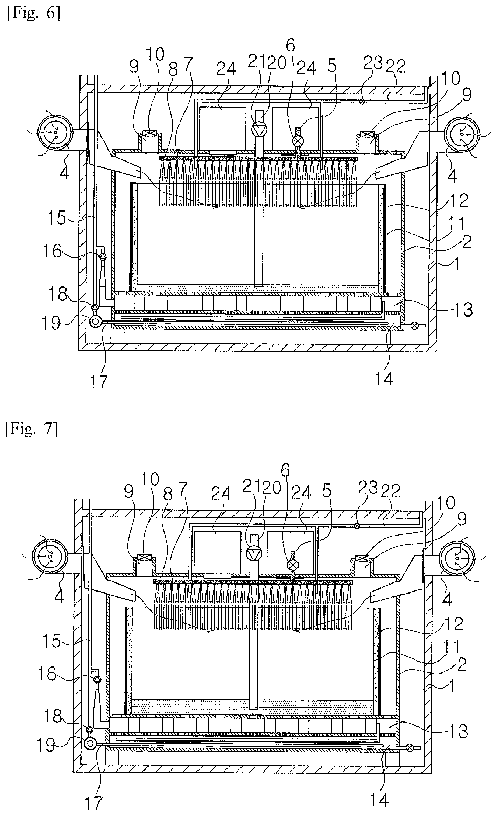

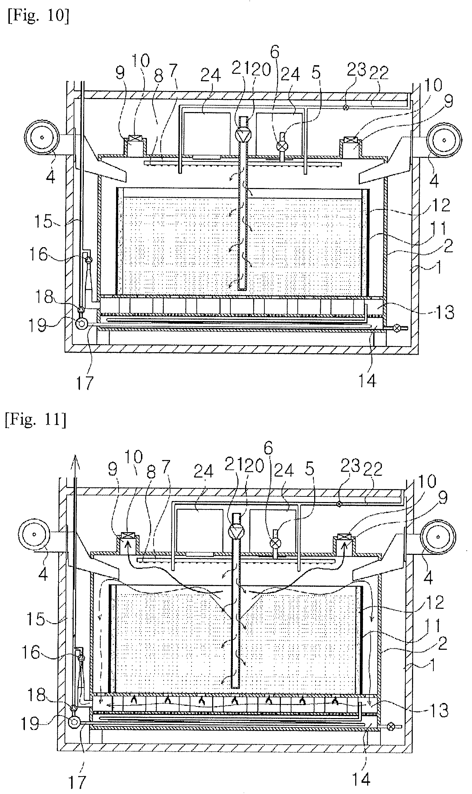

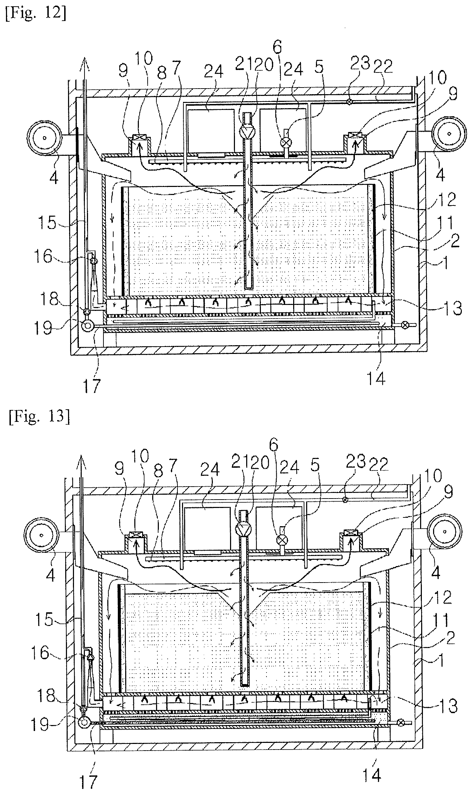

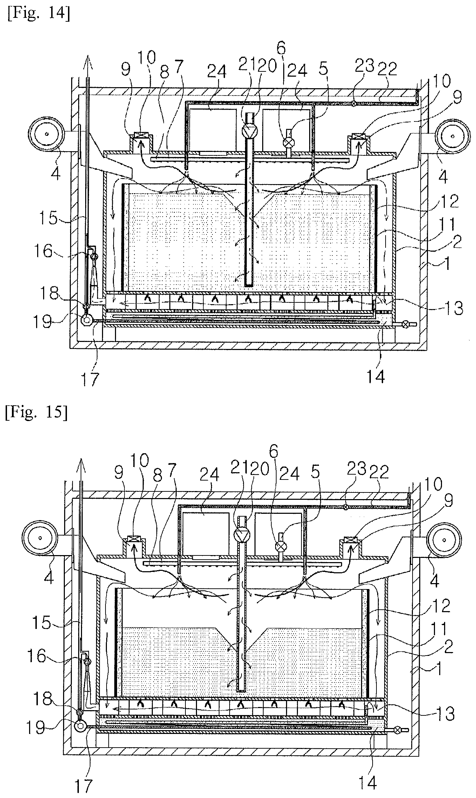

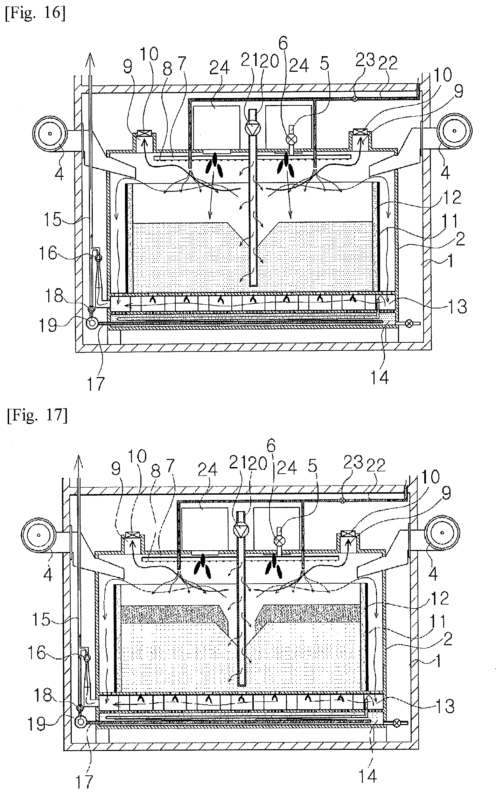

Moreover, as terms used in the present invention, general terms generally widely used at present as possible are selected, but in a specific case, terms arbitrarily selected by an applicant may be used and in this case, meanings thereof are described in detail in a description part of the present invention which is relevant, and as a result, it is apparent that the present invention is appreciated with not simple names of terms but the meanings of the terms. The invention is defined by the appending claims. FIGS. 1 to 17 are diagrams illustrating an air-conditioning system according to an exemplary embodiment of the present invention and the air-conditioning system according to the exemplary embodiment includes a storage chamber 1 having a space portion therein, a cooling chamber 2 including a heat medium supplying unit positioned in the storage chamber 1, having the space portion therein, and supplying a heat medium onto the space portion and including an air inflow unit configured to receive external air to cool the heat medium through the supplied air and store the cooled heat medium, and a cool wind supplying unit configured to supply air cooled to a low temperature by exchanging heat with the cooled heat medium stored in the cooling chamber 2 to a use place 3.

That is, in the winter time, the heat medium is received through the heat medium supplying unit and external cool air is received through the air inflow unit to cool the heat medium, and cool and store the cooled heat medium in the cooling chamber 2 and thereafter, as necessary in the summer time, the cool wind which exchanges heat with the cooled heat medium stored in the cooling chamber 2 selectively to be cooled at the low temperature is supplied to the use place 3 through the cool wind supplying unit to cool the use place 3.

Therefore, an economic gain is obtained as a room is cooled without consuming additional energy for production of cooling power and discharge of greenhouse gas is reduced by decreasing a greenhouse gas generation cause through, thereby implementing environment-friendly air-conditioning to implement environment-friendly air-conditioning.

In the air-conditioning system according to the exemplary embodiment, it is preferable that the storage chamber 1 is formed by a basement of a multi-story building and the use place 3 is constituted by ground stories including the basement of the multi-story building.

It is most preferable that the environment-friendly air-conditioning system is implemented by using the basement of the multi-story building.

The heat medium is most preferably composed of water in order to use ice (a solid state of water) having relatively high cooling power storage density, but the present invention is not limited thereto.

In the air-conditioning system according to the exemplary embodiment, the air inflow unit is formed by a blower 4 that is provided in the storage chamber 1 to blow external air to the cooling chamber 2.

That is, the heat medium is cooled by supplying cool air enough to cool water to the cooling chamber 2 from the outside of a building in the winter time by using the blower 4 in the winter time to be stored in an ice state.

Of course, after a cooling work of the heat medium is completed, the ice stored in the cooling chamber 2 is prevented from being liquefied without permission by closing the cooling chamber 2 so as to prevent the external air from flowing into the cooling chamber 2.

In the air-conditioning system according to the exemplary embodiment, the heat medium supplying unit includes a supply pipe 5 configured to supply water from the outside, a first valve 6 provided in the supply pipe 5 and configured to open and close the supply of the heat medium, a branch pipe 7 provided in the cooling chamber 2 and connected with the supply pipe 5 to receive the heat medium, and branched into multiple pipes, and an injection nozzle 8 provided in the branch pipe 7 and configured to inject the heat medium that flows into the branch pipe 7 to the cooling chamber 2.

As a result, air is supplied through the supply pipe 5, and the heat medium is injected and supplied into the cooling chamber 2 from the injection nozzle 8 via the branch pipe 7 by opening the first valve 6.

That is, as the heat medium is minutely injected into the cooling chamber 2 to be evenly supplied throughout an entire area on a space portion of the cooling chamber 2, the heat medium is easily condensed by increasing a contact area with the cool air supplied by the blower 4 to be stored while the heat medium is state-changed to the ice state.

Therefore, heat-exchange efficiency of the cool air and the heat medium is increased to rapidly cool and store the heat medium.

As described above, it is preferable that the branch pipe 7 extends radially in plural around the supply pipe 5 to evenly supply the heat medium to the entire area of the cooling chamber 2, but the present invention is not limited thereto.

In the air-conditioning system according to the exemplary embodiment, an air collecting chamber 9 configured to collect high-temperature air in the cooling chamber 2 and discharge the collected air to the outside is provided in an upper part of the space portion of the cooling chamber 2, and a discharge valve 10 configured to open and close based on pressure set according to the pressure of air to discharge the air to the outside is provided in the air collecting chamber 9.

That is, air of which the temperature is increased by receiving heat through heat-exchange with the heat medium is naturally lifted in the cooling chamber2 and the temperature-increased air is received by the air collecting chamber 9 and discharged to the outside (storage chamber) through the discharge valve 10.

Accordingly, the cool air that exchanges heat with the heat medium in the cooling chamber 2 continuously exchanges heat with low-temperature air which flows in from the outside to increase cooling efficiency of the heat medium.

In the air-conditioning system according to the exemplary embodiment, a storage tank 11 in which the heat medium is cooled and stored is provided in the cooling chamber 2 to store the heat medium in an additional space on the cooling chamber 2, and it is preferable that an inner wall of the storage tank 11 is formed by a heat insulator 12 having elasticity to have extensibility.

That is, breakage and damage are prevented by actively responding to a volume which varies depending on a state change depending on condensation and liquefaction of the heat medium.

An air chamber 13 in which cooling air is circulated is provided in a lower part of the storage tank 11, a housing chamber 14 housing a liquefied heat medium generated by liquefying the cooled heat medium is provided in a lower part of the air chamber 13, and the air chamber 13 is connected with the storage tank 11 and the housing chamber 14, and as a result, the air and the liquefied heat medium are circulated in the air chamber 13.

To this end, a plurality of via-holes is preferably formed on a bottom surface of the storage tank 11.

Therefore, as necessary in the summer timeair is input into the cooling chamber 2 to exchange heat with the cooled heat medium stored in the storage tank 11, the cooled cool wind is supplied to the use place 3 via the cool wind supplying unit through the air chamber 13, and the liquefied heat medium freely falls to be housed in the housing chamber 14 via the air chamber 13.

While the liquefied heat medium is housed in the housing chamber 14 via the air chamber 13, the cool wind passing through the air chamber 13 is further cooled and supplied to the use place 3.

A blowing pipe 15 configured to supply air to the use place 3 is provided in the air chamber 13, a second valve 16 opened and closed to control the supply of air is provided in the blowing pipe 15, and an input pipe 17 configured to receive air from the outside and exchange heat with the liquefied heat medium housed in the housing chamber 14 to cool the received air at the low temperature and connected with the blowing pipe 15 to supply the air cooled at the low temperature is provided in the housing chamber 14.

That is, the cool wind supplying unit that supplies the cool wind to the use place 3 from the cooling chamber 2is constituted by the blowing pipe 15, the second valve 16, and the input pipe 17.

The input pipe 17 includes a third valve 18 configured to open and close the supply of air and an air pump 19 configured to forcibly blow air.

Therefore, the cool wind that remains in the air chamber 13 is sent to the use place 3 through the blowing pipe 15 to cool the use place 3, and the cool wind is further supplied to the use place 3 by forcibly blowing the cool wind cooled through the housing chamber 14 through the input pipe 17 by using the air pump 19 due to a necessity to further supply the cool wind to the use place 3 to thereby control the temperature of air.

In the air-conditioning system according to the exemplary embodiment, an inflow pipe 20 supplying the air of the storage chamber 1 to the space portion of the cooling chamber 2 and constituted by a plurality of discharge holes is provided in the cooling chamber 2, and a fourth valve 21 opened and closed to control the supply of air is provided in the inflow pipe 20.

Therefore, as air that exchanges heat with the cooled heat medium stored in the storage tank 11, indoor air of the storage chamber 1, which has a lower temperature feature than outdoor air of the building is used, and as a result, air-conditioning is achieved while consuming less cooling energy of the heat medium.

In the air-conditioning system according to the exemplary embodiment, a recovery pipe 22 configured to supply the low-temperature used air collected in the use place 3 is provided in the cooling chamber 2 and a fifth valve 23 opened and closed to control the supply of air is provided in the recovery pipe 22.

That is, as the air that exchanges heat with the cooled heat medium stored in the storage tank 11, the used low-temperature indoor air which has the lower temperature feature than outdoor air of the building is reused, and as a result, air-conditioning is achieved while consuming less cooling energy of the heat medium, thereby saving energy.

As described above, when the cooled heat medium stored in the storage tank 11 is lost, the cooling chamber 2 is connected with an outlet of an ice maker 24 to receive ice made by the ice maker 24, in the air-conditioning system according to the exemplary embodiment, in order to complement the loss.

It is preferable that the ice maker 24 is provided to receive power through a solar cell provided in the building of the use place 3 or receive power through a wind power generator provided in the building of the use place 3.

That is, it is most preferable to supplement the cooling chamber 2 with the cooling power by using natural energy.

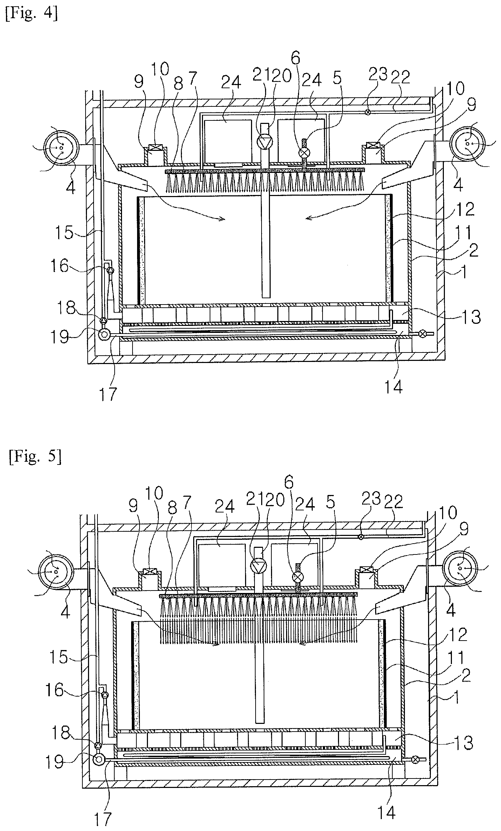

In the air-conditioning system according to the exemplary embodiment configured as above, the external cool air is supplied to the cooling chamber 2 in the winter time and water which is the heat medium is received through the heat medium supplying unit, and the heat medium is cooled and stored in the storage tank 11, as illustrated in FIGS. 4 to 8.

In this case, the heat medium which is evenly injected throughout the entire area of the storage tank 11 through the branch pipe 7 is preferably refrigerated and stored in multiple stages while forming stories.

That is, by repeating a process of cooling water with a predetermined thickness and then stacking and cooling water with a predetermined thickness thereon, ice is cooled and stored to be stacked in multiple stages with stories.

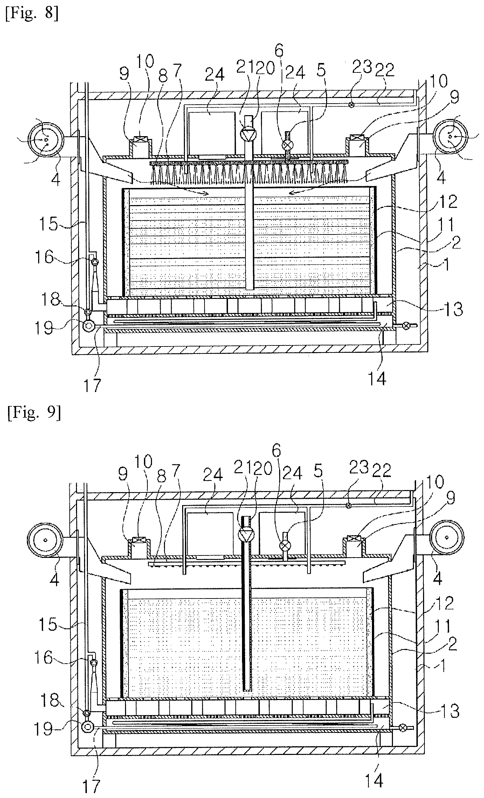

As illustrated in FIGS. 9 to 15, as necessary in the summer timewhen the air of the storage chamber 1 is input into the upper part of the storage tank 11 and thus exchanges heat with the ice to form the cool wind, the cool wind freely falls downward to flow into the air chamber 13 and is supplied to the use place 3 through the blowing pipe 15 configuring the cool wind supplying unit to cool the use place 3.

A process is sequentially performed, in which the air that cools the use place 3 and is recovered to the recovery pipe 22 is reinput into the cooling chamber 2 to be heat-exchanged and thereafter, reblown to the use place in a cool wind state, and as a result, the air is circulated.

The ice is liquefied by the air supplied to the storage tank 11 to be converted into a liquid state and thereafter, freely falls and is housed in the housing chamber 14. Therefore, the liquefied water housed in the housing chamber 14 which is at the low temperature exchanges heat with air that passes through the input pipe 17 to generate the cool wind and the cool wind is forcibly blown to the use place through the air pump 19.

That is, when a large amount of cool wind is required, the cool wind is just supplied by driving the air pump 19.

When the heat medium in a cooling state, which is stored in the storage tank 11 is excessively consumed, stable air-conditioning is achieved by supplementing the cooling power by receiving ice made through the ice maker 24.

Although the present invention has been described with the above examples, the present invention is not particularly limited to the examples and various modifications can be made without departing from the scope of the present invention.

The scope of the present invention being defined by the following appended claims.

## Claims

1. An air-conditioning system based on seasonal cooling power storage, comprising:
a storage chamber (1) having a space portion therein;
a cooling chamber (2) including a heat medium supplying unit positioned in the storage chamber (1), having a space portion therein, and supplying a heat medium onto the space portion and including an air inflow unit configured to receive external air to cool the heat medium through the supplied air and store the cooled heat medium; and
a cool wind supplying unit configured to supply air cooled at a low temperature by exchanging heat with the cooled heat medium stored in the cooling chamber (2) to a use place (3),
**characterized in that** an air collecting chamber (9) configured to collect high-temperature air in the cooling chamber (2) and discharge the collected air to the outside is provided in an upper part of the space portion of the cooling chamber (2), and a discharge valve (10) configured to open and close based on pressure set according to the pressure of air to discharge the air to the outside is provided in the air collecting chamber (9).

2. The air-conditioning system according to claim 1, wherein the storage chamber (1) is formed by a basement of a multi-story building.

3. The air-conditioning system according to claim 1, wherein the use place (3) is constituted by ground stories including the basement of the multi-story building.

4. The air-conditioning system according to claim 1, wherein the heat medium is composed of water.

5. The air-conditioning system according to claim 1, wherein the air inflow unit is formed by a blower (4) that is provided in the storage chamber (1) to blow external air to the cooling chamber (2).

6. The air-conditioning system according to claim 1, wherein the heat medium supplying unit includes:
a supply pipe (5) configured to supply water from the outside;
a first valve (6) provided in the supply pipe (5) and configured to open and close the supply of the heat medium;
a branch pipe (7) provided in the cooling chamber (2) and connected with the supply pipe (5) to receive the heat medium, and branched into multiple pipes; and
an injection nozzle (8) provided in the branch pipe (7) and configured to inject the heat medium that flows into the branch pipe (7) to the cooling chamber (2).

7. The air-conditioning system according to claim 6, wherein the branch pipe (7) extends radially in plural around the supply pipe (5).

8. The air-conditioning system according to claim 1, wherein a storage tank (11) in which the heat medium is cooled and stored is provided in the cooling chamber (2).

9. The air-conditioning system according to claim 8, wherein an inner wall of the storage tank (11) is formed by a heat insulator (12) having elasticity to have extensibility.

10. The air-conditioning system according to claim 8, wherein an air chamber (13) in which cooling air is circulated is provided in a lower part of the storage tank (11).

11. The air-conditioning system according to claim 10, wherein a housing chamber (14) housing a liquefied heat medium generated by liquefying the cooled heat medium is provided in a lower part of the air chamber (13).

12. The air-conditioning system according to claim 8, wherein a plurality of via-holes is formed on a bottom surface of the storage tank (11).

13. The air-conditioning system according to any one of claims 10 and 11, wherein the air chamber (13) is connected with the storage tank (11) and the housing chamber (14) such that the air and the liquefied heat medium flows in the air chamber (13).

14. The air-conditioning system according to claim 10, wherein a blowing pipe (15) configured to supply air to the use place (3) is provided in the air chamber (13), and a second valve (16) opened and closed to control the supply of air is provided in the blowing pipe (15).

15. The air-conditioning system according to any one of claims 11 and 14, wherein an input pipe (17) configured to receive air from the outside and exchange heat with the liquefied heat medium housed in the housing chamber (14) to cool the received air at the low temperature and connected with the blowing pipe (15) to supply the air cooled at the low temperature is provided in the housing chamber (14).

16. The air-conditioning system according to claim 15, wherein a third valve (18) configured to open and close the supply of air is provided in the input pipe (17) and an air pump (19) configured to forcibly blow air is provided in the input pipe (17).

17. The air-conditioning system according to claim 1, wherein an inflow pipe (20) supplying the air of the storage chamber (1) to the space portion of the cooling chamber (2) and constituted by a plurality of discharge holes is provided in the cooling chamber (2), and a fourth valve (21) opened and closed to control the supply of air is provided in the inflow pipe (20).

18. The air-conditioning system according to claim 1, wherein a recovery pipe (22) configured to supply the low-temperature used air collected in the use place (3) is provided in the cooling chamber (2) and a fifth valve (23) opened and closed to control the supply of air is provided in the recovery pipe (22).

19. The air-conditioning system according to claim 1, wherein the cooling chamber (2) is connected with an outlet of an ice maker (24) to receive ice made by the ice maker (24).

20. The air-conditioning system according to claim 19, wherein the ice maker (24) receives power through a solar cell provided in the building of the use place (3).

21. The air-conditioning system according to claim 19, wherein the ice maker (24) receives power through a wind power generator provided in the building of the use place (3).

22. The air-conditioning system according to claim 1, wherein by sequentially repeating a process of cooling water with a predetermined thickness and then stacking and cooling water with a predetermined thickness thereon in cooling of a heat medium through outdoor air, ice is cooled and stored to be effectively stacked in multiple stages with stories.

## Patentansprüche

1. Klimatisierungssystem, das auf einem saisonalen Kühlleistungsspeicher basiert, umfassend:
eine Speicherkammer (1) mit einem Raumabschnitt darin,
eine Kühlkammer (2), die eine Wärmemedium-Zuführeinheit aufweist, die in der Speicherkammer (1) positioniert ist, die einen Raumabschnitt darin hat und ein Wärmemedium auf den Raumabschnitt zuführt und eine Lufteinströmungseinheit aufweist, die konfiguriert ist, um externe Luft aufzunehmen, um das Wärmemedium durch die zugeführte Luft zu kühlen und das gekühlte Wärmemedium zu speichern, und
eine Kühlwind-Zuführeinheit, die konfiguriert ist, um Luft zuzuführen, die bei einer niedrigen Temperatur durch Austauschen von Wärme mit dem gekühlten Wärmemedium gekühlt ist, das in der Kühlkammer (2) zu einem Verwendungsplatz (3) gespeichert ist,
**dadurch gekennzeichnet, dass** eine Luftsammelkammer (9), die konfiguriert ist, um Hochtemperaturluft in der Kühlkammer (2) zu sammeln und die gesammelte Luft zu der Außenseite abzulassen, in einem oberen Teil des Raumabschnitts der Kühlkammer (2) bereitgestellt ist und ein Auslassventil (10), das konfiguriert ist, um basierend auf einem eingestellten Druck gemäß dem Luftdruck zu öffnen und zu schließen, um die Luft zu der Außenseite abzulassen, in der Luftsammelkammer (9) bereitgestellt ist.

2. Klimatisierungssystem nach Anspruch 1, wobei die Speicherkammer (1) durch einen Keller eines mehrstöckigen Gebäudes gebildet ist.

3. Klimatisierungssystem nach Anspruch 1, wobei der Verwendungsplatz (3) aus Bodenstockwerken besteht, die den Keller des mehrstöckigen Gebäudes aufweisen.

4. Klimatisierungssystem nach Anspruch 1, wobei das Wärmemedium aus Wasser besteht.

5. Klimatisierungssystem nach Anspruch 1, wobei die Lufteinströmungseinheit durch ein Gebläse (4) gebildet ist, das in der Speicherkammer (1) bereitgestellt ist, um externe Luft zu der Kühlkammer (2) zu blasen.

6. Klimatisierungssystem nach Anspruch 1, wobei die Wärmemedium-Zuführeinheit Folgendes aufweist:
ein Zuführrohr (5), das konfiguriert ist, um Wasser von der Außenseite zuzuführen,
ein erstes Ventil (6), das in dem Zuführrohr (5) bereitgestellt und konfiguriert ist, um die Zufuhr des Wärmemediums zu öffnen und zu schließen,
ein Abzweigrohr (7), das in der Kühlkammer (2) bereitgestellt und mit dem Zuführrohr (5) verbunden ist, um das Wärmemedium aufzunehmen, und in mehrere Rohre verzweigt ist, und
eine Einspritzdüse (8), die in dem Abzweigrohr (7) bereitgestellt und konfiguriert ist, um das Wärmemedium einzuspritzen, das in das Abzweigrohr (7) zu der Kühlkammer (2) strömt.

7. Klimatisierungssystem nach Anspruch 6, wobei sich das Abzweigrohr (7) radial mehrfach um das Zuführrohr (5) erstreckt.

8. Klimatisierungssystem nach Anspruch 1, wobei ein Speichertank (11), in dem das Wärmemedium gekühlt und gespeichert ist, in der Kühlkammer (2) bereitgestellt ist.

9. Klimatisierungssystem nach Anspruch 8, wobei eine innere Wand des Speichertanks (11) durch einen Wärmeisolator (12) gebildet ist, der Elastizität hat, um Dehnbarkeit zu haben.

10. Klimatisierungssystem nach Anspruch 8, wobei eine Luftkammer (13), in der gekühlte Luft umgewälzt wird, in einem unteren Teil des Speichertanks (11) bereitgestellt ist.

11. Klimatisierungssystem nach Anspruch 10, wobei eine Gehäusekammer (14), die ein verflüssigtes Wärmemedium unterbringt, das durch Verflüssigen des gekühlten Wärmemediums erzeugt wird, in einem unteren Teil der Luftkammer (13) bereitgestellt ist.

12. Klimatisierungssystem nach Anspruch 8, wobei mehrere Durchgangslöcher auf einer Bodenfläche des Speichertanks (11) gebildet sind.

13. Klimatisierungssystem nach einem der Ansprüche 10 und 11, wobei die Luftkammer (13) mit dem Speichertank (11) und der Gehäusekammer (14) derart verbunden ist, dass die Luft und das verflüssigte Wärmemedium in die Luftkammer (13) strömen.

14. Klimatisierungssystem nach Anspruch 10, wobei ein Blasrohr (15), das konfiguriert ist, um Luft zu dem Verwendungsplatz (3) zuzuführen, in der Luftkammer (13) bereitgestellt ist und ein zweites Ventil (16), das öffnet und schließt, um die Zufuhr von Luft zu steuern, in dem Blasrohr (15) bereitgestellt ist.

15. Klimatisierungssystem nach einem der Ansprüche 11 und 14, wobei ein Eingangsrohr (17), das konfiguriert ist, um Luft von der Außenseite aufzunehmen und Wärme mit dem verflüssigten Wärmemedium auszutauschen, das in der Gehäusekammer (14) untergebracht ist, um die aufgenommene Luft bei der niedrigen Temperatur zu kühlen, und mit dem Blasrohr (15) verbunden ist, um die Luft zuzuführen, die bei der niedrigen Temperatur gekühlt ist, in der Gehäusekammer (14) bereitgestellt ist.

16. Klimatisierungssystem nach Anspruch 15, wobei ein drittes Ventil (18), das konfiguriert ist, um die Zufuhr von Luft zu öffnen und zu schließen, in dem Eingangsrohr (17) bereitgestellt ist und eine Luftpumpe (19), die konfiguriert ist, um Luft zwangsweise zu blasen, in dem Eingangsrohr (17) bereitgestellt ist.

17. Klimatisierungssystem nach Anspruch 1, wobei ein Einströmungsrohr (20), das die Luft der Speicherkammer (1) zu dem Raumabschnitt der Kühlkammer (2) zuführt und aus mehreren Ablasslöchern besteht, in der Kühlkammer (2) bereitgestellt ist und ein viertes Ventil (21), das öffnet und schließt, um die Zufuhr von Luft zu steuern, in dem Einströmungsrohr (20) bereitgestellt ist.

18. Klimatisierungssystem nach Anspruch 1, wobei ein Rückgewinnungsrohr (22), das konfiguriert ist, um die bei niedriger Temperatur genutzte Luft, die in dem Verwendungsplatz (3) gesammelt ist, zuzuführen, in der Kühlkammer (2) bereitgestellt ist und ein fünftes Ventil (23), das öffnet und schließt, um die Zufuhr von Luft zu steuern, in dem Rückgewinnungsrohr (22) bereitgestellt ist.

19. Klimatisierungssystem nach Anspruch 1, wobei die Kühlkammer (2) mit einem Auslass eines Eiserzeugers (24) verbunden ist, um das Eis aufzunehmen, das durch den Eiserzeuger (24) hergestellt wird.

20. Klimatisierungssystem nach Anspruch 19, wobei der Eiserzeuger (24) Leistung durch eine Solarzelle aufnimmt, die in dem Gebäude des Verwendungsplatzes (3) bereitgestellt ist.

21. Klimatisierungssystem nach Anspruch 19, wobei der Eiserzeuger (24) Leistung durch einen Windkraftgenerator aufnimmt, der in dem Gebäude des Verwendungsplatzes (3) bereitgestellt ist.

22. Klimatisierungssystem nach Anspruch 1, wobei durch sequenzielles Wiederholen eines Vorgangs von Kühlen von Wasser mit einer vorbestimmten Dicke und dann Stapeln und Kühlen von Wasser mit einer vorbestimmten Dicke darauf beim Kühlen eines Wärmemediums durch Außenluft Eis gekühlt und gespeichert wird, um wirksam in mehreren Stufen mit Stockwerken gestapelt zu werden.

## Revendications

1. Système de climatisation basé sur un stockage d'énergie de refroidissement saisonnier, comprenant :
une chambre de stockage (1) ayant une partie d'espace à l'intérieur de celle-ci ;
une chambre de refroidissement (2) comprenant une unité d'alimentation en milieu thermique positionnée dans la chambre de stockage (1), ayant une partie d'espace à l'intérieur de celle-ci, et distribuant un milieu thermique sur la partie d'espace et comprenant une unité d'entrée d'écoulement d'air configurée pour recevoir de l'air externe pour refroidir le milieu thermique par l'intermédiaire de l'air distribué et stocker le milieu thermique refroidi ; et
une unité d'alimentation en vent froid configurée pour distribuer de l'air refroidi à une basse température par échange de chaleur avec le milieu thermique refroidi stocké dans la chambre de refroidissement (2), à un lieu d'utilisation (3),
**caractérisé par le fait qu'**une chambre de collecte d'air (9) configurée pour collecter de l'air à haute température dans la chambre de refroidissement (2) et évacuer l'air collecté vers l'extérieur est située dans une partie supérieure de la partie d'espace de la chambre de refroidissement (2), et une soupape d'évacuation (10) configurée pour s'ouvrir et se fermer sur la base d'une pression définie selon la pression d'air pour évacuer l'air vers l'extérieur est située dans la chambre de collecte d'air (9).

2. Système de climatisation selon la revendication 1, dans lequel la chambre de stockage (1) est formée par une cave d'un bâtiment à multiples étages.

3. Système de climatisation selon la revendication 1, dans lequel le lieu d'utilisation (3) est constitué d'étages de rez-de-chaussée, y compris la cave du bâtiment à multiples étages.

4. Système de climatisation selon la revendication 1, dans lequel le milieu thermique est composé d'eau.

5. Système de climatisation selon la revendication 1, dans lequel l'unité d'entrée d'écoulement d'air est formée par une soufflante (4) qui est située dans la chambre de stockage (1) pour souffler de l'air externe vers la chambre de refroidissement (2).

6. Système de climatisation selon la revendication 1, dans lequel l'unité d'alimentation en milieu thermique comprend :
un tuyau d'alimentation (5) configuré pour distribuer de l'eau provenant de l'extérieur ;
une première soupape (6) située dans le tuyau d'alimentation (5) et configurée pour ouvrir et fermer l'alimentation du milieu thermique ;
un tuyau à ramifications (7) situé dans la chambre de refroidissement (2) et relié au tuyau d'alimentation (5) pour recevoir le milieu thermique, et ramifié en de multiples tuyaux ; et
une buse d'injection (8) située dans le tuyau à ramifications (7) et configurée pour injecter le milieu thermique, qui s'écoule dans le tuyau à ramifications (7), dans la chambre de refroidissement (2).

7. Système de climatisation selon la revendication 6, dans lequel le tuyau à ramifications (7) s'étend radialement autour du tuyau d'alimentation (5).

8. Système de climatisation selon la revendication 1, dans lequel un réservoir de stockage (11), dans lequel le milieu thermique est refroidi et stocké, est situé dans la chambre de refroidissement (2).

9. Système de climatisation selon la revendication 8, dans lequel une paroi interne du réservoir de stockage (11) est formée par un isolant thermique (12) ayant une élasticité pour avoir une extensibilité.

10. Système de climatisation selon la revendication 8, dans lequel une chambre à air (13), dans laquelle de l'air de refroidissement est amené à circuler, est située dans une partie inférieure du réservoir de stockage (11).

11. Système de climatisation selon la revendication 10, dans lequel une chambre de réception (14) recevant un milieu thermique liquéfié généré par liquéfaction du milieu thermique refroidi est située dans une partie inférieure de la chambre à air (13).

12. Système de climatisation selon la revendication 8, dans lequel une pluralité de trous traversants sont formés sur une surface inférieure du réservoir de stockage (11).

13. Système de climatisation selon l'une quelconque des revendications 10 et 11, dans lequel la chambre à air (13) est reliée au réservoir de stockage (11) et à la chambre de réception (14) de telle sorte que l'air et le milieu thermique liquéfié s'écoulent dans la chambre à air (13).

14. Système de climatisation selon la revendication 10, dans lequel un tuyau de soufflage (15) configuré pour distribuer de l'air au lieu d'utilisation (3) est situé dans la chambre à air (13), et une deuxième soupape (16) ouverte et fermée pour contrôler l'alimentation en air est située dans le tuyau de soufflage (15).

15. Système de climatisation selon l'une quelconque des revendications 11 et 14, dans lequel un tuyau d'entrée (17), configuré pour recevoir de l'air provenant de l'extérieur et échanger de la chaleur avec le milieu thermique liquéfié reçu dans la chambre de réception (14) pour refroidir l'air reçu à la basse température et relié au tuyau de soufflage (15) pour distribuer l'air refroidi à la basse température, est situé dans la chambre de réception (14).

16. Système de climatisation selon la revendication 15, dans lequel une troisième soupape (18) configurée pour ouvrir et fermer l'alimentation en air est située dans le tuyau d'entrée (17), et une pompe à air (19) configurée pour souffler de l'air avec force est située dans le tuyau d'entrée (17).

17. Système de climatisation selon la revendication 1, dans lequel un tuyau d'entrée d'écoulement (20) distribuant l'air de la chambre de stockage (1) à la partie d'espace de la chambre de refroidissement (2) et constitué par une pluralité de trous d'évacuation est situé dans la chambre de refroidissement (2), et une quatrième soupape (21) ouverte et fermée pour commander l'alimentation en air est située dans le tuyau d'entrée d'écoulement (20).

18. Système de climatisation selon la revendication 1, dans lequel un tuyau de récupération (22) configuré pour distribuer l'air usagé à basse température collecté dans le lieu d'utilisation (3) est situé dans la chambre de refroidissement (2), et une cinquième soupape (23) ouverte et fermée pour commander l'alimentation en air est située dans le tuyau de récupération (22).

19. Système de climatisation selon la revendication 1, dans lequel la chambre de refroidissement (2) est reliée à une sortie d'une machine à glace (24) pour recevoir de la glace réalisée par la machine à glace (24).

20. Système de climatisation selon la revendication 19, dans lequel la machine à glace (24) reçoit de l'énergie par l'intermédiaire d'une pile solaire située dans le bâtiment du lieu d'utilisation (3).

21. Système de climatisation selon la revendication 19, dans lequel la machine à glace (24) reçoit de l'énergie par l'intermédiaire d'un générateur éolien situé dans le bâtiment du lieu d'utilisation (3).

22. Système de climatisation selon la revendication 1, dans lequel, par répétition séquentiel d'un traitement de refroidissement d'eau avec une épaisseur prédéterminée, puis empilement et refroidissement de l'eau avec une épaisseur prédéterminée sur celui-ci lors du refroidissement d'un milieu thermique par l'intermédiaire de l'air extérieur, la glace est refroidie et stockée pour être empilée efficacement en multiples couches avec les étages.
